**Europäisches Patentamt**

**European Patent Office**

**Office européen des brevets**

(19)

(11) Veröffentlichungsnummer : **0 386 176 B1**

(12) # EUROPÄISCHE PATENTSCHRIFT

(45) Veröffentlichungstag der Patentschrift :
**02.01.92 Patentblatt 92/01**

(51) Int. Cl.$^5$ : **F24J 3/08**

(21) Anmeldenummer : **89907059.3**

(22) Anmeldetag : **04.07.89**

(86) Internationale Anmeldenummer :
**PCT/CH89/00127**

(87) Internationale Veröffentlichungsnummer :
**WO 90/00707 25.01.90 Gazette 90/03**

(54) **ANLAGE ZUM AUSTAUSCH VON ENERGIE ZWISCHEN ERDREICH UND EINEM ENERGIEAUSTAUSCHER.**

(30) Priorität : **08.07.88 CH 2607/88**

(43) Veröffentlichungstag der Anmeldung :
**12.09.90 Patentblatt 90/37**

(45) Bekanntmachung des Hinweises auf die
Patenterteilung :
**02.01.92 Patentblatt 92/01**

(84) Benannte Vertragsstaaten :
**AT BE CH DE FR GB IT LI LU NL SE**

(56) Entgegenhaltungen :
**EP-A- 0 045 993**
**CH-A- 658 513**
**DE-A- 3 149 636**

(56) Entgegenhaltungen :
**FR-A- 2 444 903**
**GB-A- 2 058 334**
**Patent Abstracts of Japan, vol. 10, No: 92**
**(M-468) (2149), 9 April 1986; JP-A-60228855**
**(Nitsusaku K.K.) 14 November 1985**

(73) Patentinhaber : **HILDEBRAND, Hans**
**Eichrüti 14a**
**CH-6330 Cham (CH)**

(72) Erfinder : **HILDEBRAND, Hans**
**Eichrüti 14a**
**CH-6330 Cham (CH)**

(74) Vertreter : **Schmauder, Klaus Dieter et al**
**Schmauder & Wann Patentanwaltsbüro**
**Zwängiweg 7**
**CH-8038 Zürich (CH)**

## Beschreibung

Die Erfindung betrifft eine Anlage zur Nutzung von Erdwärme gemäss Oberbegriff des Anspruches 1.

Anlagen der eingangs genannten. Art sind bekannt. Bei einer solchen Anlage mündet beispielsweise Rücklaufleitung in den oberen Abschnitt des Bohrloches unterhalb der Erdoberfläche. Das Rückflusswasser fliesst dann durch die poröse Füllung bis an den Grund des Bohrloches, erwärmt sich dabei und wird mittels der Pumpe über die Vorlaufleitung wieder zur Wärmepumpe geführt. Nachteilig dabei ist es, dass die Führung des Rücklaufwassers im Rücklaufbereich unkontrolliert ist, wodurch es einerseits zu Kurzschlussströmen kommen kann, die eine ausreichende Erwärmung des Rücklaufwassers erschweren. Andererseits besteht die Gefahr des Zusetzens der porösen Füllung, wodurch der Fliesswiderstand erhöht wird und die Gefahr besteht, dass das Rücklaufwasser in das Erdreich abfliesst. Es muss dann mittels der Pumpe aus dem umgebenden Erdreich Wasser angesaugt werden, was jedoch wegen des Fliesswiderstandes im Erdreich problematisch ist. Ueberdies wird dadurch aus dem Erdreich Schwemmmaterial angesaugt, was wiederum zur Verstopfung des Ansaugbereiches am Grund des Bohrloches und zum Unwirksamwerden der Pumpe führt.

Aufgabe der Erfindung ist es, eine Anlage der eingangs genannten Art so auszubilden, dass die erwähnten Nachteile nicht mehr gegeben sind.

Die gestellte Aufgabe wird erfindungsgemäss durch die kennzeichnenden Merkmale des Anspruchs 1 gelöst.

Durch die Anordnung des Rücklaufrohres mit mehreren über seine Läne verteilten Querverschlüssen sowie den beidseits davon angeordneten Durchtrittsöffnungen wird ein definierter Rückflussweg des Rückflusswassers sichergestellt. Durch die Querverschlüsse wird das Rücklaufwasser gezwungen durch die Durchtrittsöffnungen radial nach aussen in die poröse Füllung einzutreten und damit auch mit der Wandung des Bohrloches in Berührung zu kommen und sich zu erwärmen. Nach dem Querverschluss kann dann das Rücklaufwasser über die Durchtrittsöffnungen wieder in das Rücklaufrohr und bis zum nächsten Querverschluss fliessen, wo es wieder zum Austritt gezwungen wird. Diese Führung des Führung des Rücklaufwassers definiert einerseits den Rücklaufweg bis an den Grund des Bohrloches und sorgt andererseits dafür, dass das Rücklaufwasser stets mit der Füllung und der Bohrlochwandung in Berührung kommt und sich so erwärmen kann. Dennoch sind die Wege so kurz, dass sich das Rücklaufwasser wieder im nächsten Abschnitt des Rücklaufrohres sammeln kann. Das radiale Austreten des Rücklaufwassers gewährleistet auch ein Freihalten der Strömungswege entlang der porösen Füllung. Wasserverluste an die Umgebung werden durch die definierte Führung des Rücklaufwassers ebenfalls vermieden. Dadurch ergibt sich eine einwandfreie Führung des Rücklaufwassers bis zum Grund des Bohrloches und bis zur Pumpe, sodass eine optimale Erwärmung des Rücklaufwassers und eine ausreichende Menge an Rücklaufwasser durch die Pumpe sichergestellt wird. Es ergibt sich eine Anlage mit hohem Wirkungsgrad und einer geringen Störanfälligkeit.

Vorteilhafte Ausgestaltungen der Anlage sind in den Ansprüchen 2 bis 7 beschrieben.

Besonders vorteilhaft ist eine Ausgestaltung der Anlage nach Anspruch 2, da durch die Längsschlitze die Wasserführung auf einen grösseren Bereich verteilt werden kann und die geringe Breite dennoch einen kräftigen Strahl ermöglicht, der in der Lage ist, einerseits die poröse Füllung bis an die Bohrlochwandung zu durchdringen und gleichzeitig etwaige Schwemmstoffe aus der porösen Füllung auszuschwemmen. Dabei ist es weiter von Vorteil, wenn die Anlage nach Anspruch 3 weitergebildet ist, sodass eine gleichmässige Verteilung der Wasserführung über die gesamte Länge des Rücklaufrohres gewährleiste ist.

Als Füllung können die verschiedensten Materialien dienen, wie Schlacke, spezielle Einbauten und dergleichen. Bevorzugt ist jedoch eine Ausbildung nach Anspruch 4.

Grundsätzlich ist es denkbar, dass nur ein Rücklaufrohr im Rücklaufbereich angeordnet ist. Wesentlich bessere Ergebnisse lassen sich jedoch durch eine Ausbildung nach Anspruch 5 erzielen, da dann alle Bereiche des Bohrloches gleichmässig erfasst und ausgenutzt werden können.

Zur Vermeidung von Korrosion ist eine Ausgestaltung der Anlage nach Anspruch 6 besonders vorteilhaft. Die aus Kunststoff bestehenden Rohre haben eine hohe Lebensdauer und vermeiden die Ablagerung von Korrosionsrückständen. Dadurch besitzt einerseits die Anlage eine hohe Lebensdauer und geringe Störanfälligkeit und überdies wird das das Bohrloch umgebende Grundwasser nicht nachteilig beeinflusst.

Die Anlage ermöglicht insbesondere auch die Ausgestaltung nach Anspruch 7, wodurch eine etwaige Verstopfung mittels Rückspülwasser beseitigt werden kann.

Ausführungsbeispiele des Gegenstandes der Erfindung werden nachfolgend anhand der Zeichnungen näher beschrieben, dabei zeigen:

Figur 1: eine Anlage in schematischer Darstellung im Vertikalschnitt und

Figur 2: den Grundbereich des Bohrloches in grösserem Massstab.

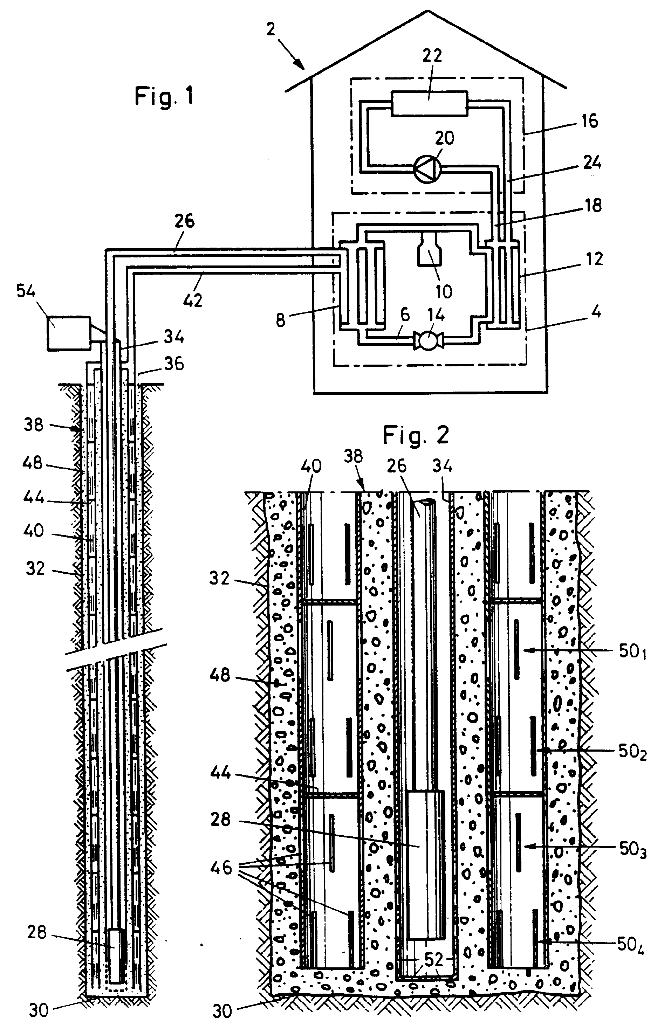

Die Figur 1 zeigt eine Anlage zur Nutzun, der Erdwärme, beispielsweise zur mindestens teilweisen Heizung eines Hauses 2. Hierzu enthält das Haus einen Energietauscher, der als Wärmepumpe 4 ausgebildet ist, die in einem Medienkreislauf 6 einen Verdampfer 8, einen Verdichter 10, einen Verflüssiger 12 und ein Drosselventil 14 enthält. Solche Wärmepumpen 4 sind bekannt.

An dem Verflüssiger 12 ist in bekannter Weise eine Heizungsanlage 16 mit einem Heizungsvorlauf 18, der eine Umwälzpumpe 20 enthält, und mit einem Wärmeverbraucher 22 angeschlossen. Von letzterem stellt ein Heizungsrücklauf 24 die Verbindung zum Verflüssiger 12 wieder her.

Am Verdampfer 8 ist eine Vorlaufleitung 26 angeschlossen, die zu einer Pumpe 28 verläuft, welche vorzugsweise am Grund 30 eines Bohrloches 32 angeordnet ist. Die Vorlaufleitung 26 und die Pumpe 28 sind von einem Schutzrohr 34 umgeben, an dass sich radial nach aussen bis zur Bohrlochwandung 36 ein Rücklaufbereich 38 anschliesst. In diesem Rücklaufbereich 38 sind mehrere im Umfang verteilte Rücklaufrohre 40 angeordnet, die in einer gemeinsamen Rücklaufleitung 42 zusammengefasst sind, welche am Verdampfer 8 angeschlossen ist.

Wie aus Figur 2 hervorgeht, reicht jedes Rücklaufrohr 40 bis annähernd an den Grund 30 des Bohrloches 32 und enthält mehrere über seine Länge verteilte Querverschlüsse 44. Beidseits solcher Querverschlüsse 44 sind Durchtrittsöffnungen 46 angeordnet, die zunächst ein Austreten des Rücklaufwassers in die poröse Füllung 48 ermöglichen, welche die Rücklaufrohre 40 umgibt und den Rücklaufbereich 38 ausfüllt. Die Durchtrittsöffnungen sind vorzugsweise Längsschlitze. Das Rücklaufrohr enthalt über seine Länge verteilt mehrere Reihen $50_{1 \text{ bis } 4}$ solcher Durchtrittsöffnungen 46.

Die den Rücklaufbereich 38 um die Rücklaufrohre 40 ausfüllende poröse Füllung 48 besteht zweckmässigerweise aus Kies. Der Rücklaufbereich 38 steht im Bereich des Grundes 30 des Bohrloches 32 über Durchgangsöffnungen 52 im Schutzrohr 34 mit dem Inneren des Schutzrohres 34 in Verbindung. Am oberen Ende des Schutzrohres 34 ist eine Spülpumpe 54 angeschlossen zur Einleitung von Rückspülwasser in das Schutzrohr 34 und durch die Durchgangsöffnungen 52 in den Rücklaufbereich 38, um eine etwaige Verschlammung der porösen Füllung 49 zu beseitigen.

Eine spezielle Ausführungsform der Anlage kann beispielsweise folgende Werte aufweisen:

| | |
|---|---|
| Bohrloch Durchmesser | : 500 bis 1000 mm |
| Bohrloch Tiefe | : 100 bis 2000 m und tiefer |
| Vorlaufleitung Druchmesser | : 50 bis 90 mm |
| Rücklaufrohr Durchmesser | : 40 bis 50 mm |
| Schutzrohr Durchmesser | : 120 bis 160 mm |
| Wasserrücklauftemperatur | : grösser 6°C |
| Wasserumlaufmenge | : 1,5 bis 10 m³/h |
| Leistung | : 30 KW bei 250 m Tiefe |
| | 50 KW bei 350 m Tiefe. |

Die isolierende Vorlaufleitung, das Rücklaufrohr bestehen zweckmässigerweise aus Kunststoff, vorzugsweise Polyvinylchlorid. Das Bohrloch selbst kann gegebenenfalls je nach den geologischen Bedingungen mindestens abschnittweise mit einem Stahlrohr ausgekleidet sein.

Der hier Verwendete Begriff Energietauscher sei in allgemeinster Form verstanden und kann einen direkten Verbraucher wie Heizschlangen in Fussböden, Verkehrswegen (z.B. Brücken, Auffahrten usw.) oder Heizungsradiatoren und dergleichen bedeuten, aber auch Wärmetauscher und insbesondere Wärmepumpen beinhalten. In der Regel wird der Energietauscher zur Abgabe von Energie, d.h. zu Heizungszwecken ausgebildet sein. Der Energietauscher kann aber auch zur Wärmeaufnahme dienen, sodass die Anlage zur Kühlung verwendet werden kann.

## Patentansprüche

1. Anlage zum Austausch von Energie zwischen Erdreich und einem Energietauscher (4), der über eine isolierende Vorlaufleitung (26) mit einer in einem Bohrloch (32) angeordneten Pumpe (28) verbunden ist, wobei die Vorlaufleitung (26) und die Pumpe (28) im Bohrloch (32) von einem unten offenen Schutzrohr (34) umgeben sind, an das sich radial nach aussen bis zur Bohrlochwandung ein Rücklaufbereich (38) für Rücklaufwasser anschliesst, der eine poröse Füllung (48) enthält und am Grund (30) des Bohrloches (32) mit der Pumpe (28) in Verbindung steht und in den eine Rücklaufleitung (42) des Energietauschers (4) mündet, dadurch gekennzeichnet, dass die Rücklaufleitung (42) im Bohrloch (32) mindestens ein bis mindestens annähernd an den Grund (30) des Bohrloches (32) reichendes Rücklaufrohr (40) aufweist, das mehrere über seine Länge verteilte Querverschlüsse (44) sowie beidseits davon angeordnete Durchtrittsöffnungen (46) enthält und das in die poröse Füllung (48) im Rücklaufbereich (38) eingebettet ist.

2. Anlage nach Anspruch 1, dadurch gekennzeichnet, dass die Durchtrittsöffnungen (46) Längsschlitze sind.

3. Anlage nach Anspruch 1 oder 2, dadurch gekennzeichnet, dass das Rücklaufrohr (40) über seine Länge verteilt mehrere Reihen (50$_{1\ bis\ 4}$) von am Umfang verteilten Durchtrittsöffnungen (46) aufweist.

4. Anlage nach einem der Ansprüche 1 bis 3, dadurch gekennzeichnet, dass die porose Füllung (48) aus Kies gebildet ist.

5. Anlage nach einem der Ansprüche 1 bis 4, dadurch gekennzeichnet, dass im Rücklaufbereich (38) des Bohrloches (32) mehrere um das Schutzrohr (34) verteilte Rücklaufrohre (40) angeordnet sind.

6. Anlage nach einem der Ansprüche 1 bis 5, dadurch gekennzeichnet, dass die Vorlaufleitung (26) und-/oder das Schutzrohr (34) und/oder das Rücklaufrohr (40) aus Kunststoff, vorzugsweise aus Polyvinylchlorid bestehen.

7. Anlage nach einem der Ansprüche 1 bis 6, dadurch gekennzeichnet, dass am Schutzrohr (34) eine Spülpumpe (54) zur Einleitung von Rückspülwasser über das Schutzrohr (34) in den Rücklaufbereich (38) anschliessbar ist.

## Claims

1. Installation for the exchange of energy between the ground and an energy exchanger (4) which is connected to a pump (28) arranged in a borehole (32) via an insulating forward pipe (26), whereby the forward pipe (26) and the pump (28) are encased in the borehole (32) by a downwardly open protective pipe (34), with an adjacent feedack area (38) for feedback water extending radially outwards up to the borehole wall, which contains a porous charge (48) and is connected at the bottom (30) of the borehole (32) to the pump (28), and into which terminates a feedback pipe (42) of the energy exchanger (4), **characterised in that** the feedback pipe (42) in the borehole (32) comprises at least one feedback pipe, which extends at least virtually to the ground (30) of the borehole (32) and incorporates several cross seals (44) spaced over its length and on both sides thereof passages (46), and which is embedded in the porous charge (48) in the feedback area (38).

2. Installation according to claim 1, **characterised in that** the passages (46) are longitudinal slots.

3. Installation according to claim 1 or 2, **characterised in that** the return pipe (40) has several rows (50$_{1\ to\ 4}$) of peripherally spaced passages (46) spaced over its length.

4. Installation according to one of the claims 1 to 3, **characterised in that** the porous charge (48) consists of gravel.

5. Installation according to one of the claims 1 to 4, **characterised in that** there are several feedback pipes in the feedback area (38) of the borehole (32), which are arranged around the protective pipe (34).

6. Installation according to one of the claims 1 to 5, **characterised in that** the forward pipe (26) and/or the protective pipe (34) and/or the feedback pipe (40) are made of plastics material, preferably of polyvinylchloride.

7. Installation according to one of the claims 1 to 6, **characterised in that** a rinsing pump (54) for the introduction of feedback rinsing water into the feedback area (38) via the protective pipe (34) is connectable to the protective pipe (34).

## Revendications

1. Installation pour l'échange d'énergie entre la terre et un échangeur d'énergie (4), qui est reliée par une conduite d'aller isolée (26) avec une pompe (28) placée dans un trou de forage (32), tandis que la conduite d'aller (26) et la pompe (28) sont entourées par un tube de protection (34) ouvert dans le bas, auquel se raccorde radialement vers l'extérieur, jusqu'à la paroi du trou de forage, une zone de retour (38) pour l'eau de retour, cette zone contenant un garnissage poreux (44) et étant en liaison avec la pompe (28) à la base (30) du trou de forage (32) et dans lequel débouche une conduite de retour (42) de l'échangeur d'énergie (4), caractérisée en ce que la conduite de retour (42) présente dans le trou de forage (32) au moins un tube de retour (40) arrivant au moins à proximité de la base (30) du trou de forage (32), ce tube contenant plusieurs fermetures transversales (44) réparties sur sa longueur ainsi que des orifices de passage (46) disposés de part et d'autre de celle-ci et étant encastré dans le garnissage poreux (48) dans la zone de retour (38).

2. Installation selon la revendication 1, caractérisée en ce que les orifices de passage (46) sont des fentes longitudinales.

3. Installation selon les revendications 1 ou 2, caractérisée en ce que le tube de retour (40) présente plu-sieurs rangées (50$_{1\ à\ 4}$) réparties sur sa longueur d'orifices de passage (46) répartis sur sa périphérie.

4. Installation selon l'une des revendications 1 à 3, caractérisée en ce que le garnissage poreux (48) est constitué de gravier.

5. Installation selon l'une des revendications 1 à 4, caractérisée en ce que plusieurs tubes de retour (40) sont répartis et disposés autour du tube de protection (34) dans la zone de retour (38) du trou de forage (32).

6. Installation selon l'une des revendications 1 à 5, caractérisée en ce que la conduite d'aller(26) et/ou le tube de protection (34) et/ou le tube de retour (40) sont réalisés en matière plastique et, de préférence, en chlorure de polyvinyle.

7. Installation selon l'une des revendications 1 à 6, caractérisée en ce qu'une pompe de rinçage (54) pour introduire de l'eau de rinçage par le tube de protection (34) dans la zone de retour (38), peut être raccordée au tube de protection (34).

Fig. 1

Fig. 2